# EUROPEAN PATENT SPECIFICATION

(11) **EP 0 600 394 B1**
(45) Date of publication and mention of the grant of the patent: **27.01.1999**
(21) Application number: 93119124.1
(22) Date of filing: 26.11.1993
(51) Int. Cl.: B23D 1/22, B23C 3/12

(54) **Weld bead cutter mechanism**
Schweisswulstschneidvorrichtung
Dispositif pour couper le cordon de soudure

(30) Priority: 27.11.1992 JP 317666/92
(43) Date of publication of application: 08.06.1994
(73) Proprietor: KUSAKABE ELECTRIC & MACHINERY CO., LTD., Kobe-shi, Hyogo-ken (JP)
(72) Inventor: Kazuo, Omura, Kakogawa-shi, Hyogo-ken (JP)
(74) Representative: Henkel, Feiler, Hänzel

(56) References cited:
- PATENT ABSTRACTS OF JAPAN vol. 12, no. 160 (M-697) 14 May 1988 & JP-A-62 277 213 (NIPPON STEEL CORP) 2 December 1987

## Description

### FIELD OF THE INVENTION

The present invention relates to a weld bead cutter mechanism in an equipment for continuously cylindrically molding metal sheet material and welding its seam to thereby manufacture an electric-seamed steel pipe, which mechanism continuously planes weld beads projecting from a weld zone of the pipe after seam-welded cylindrically and cuts them into small pieces according to the precharacterising portion of claim 1; see PATENT ABSTRACTS OF JAPAN vol.12, no.160 (M-697) & 7P-A-62 277 213.

### BACKGROUND OF THE INVENTION

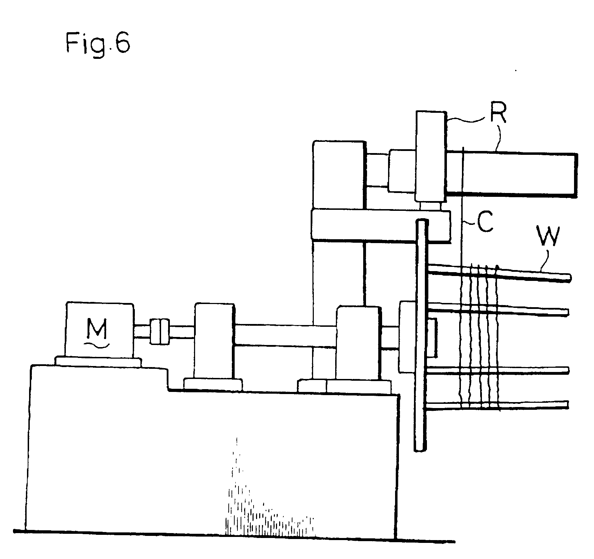

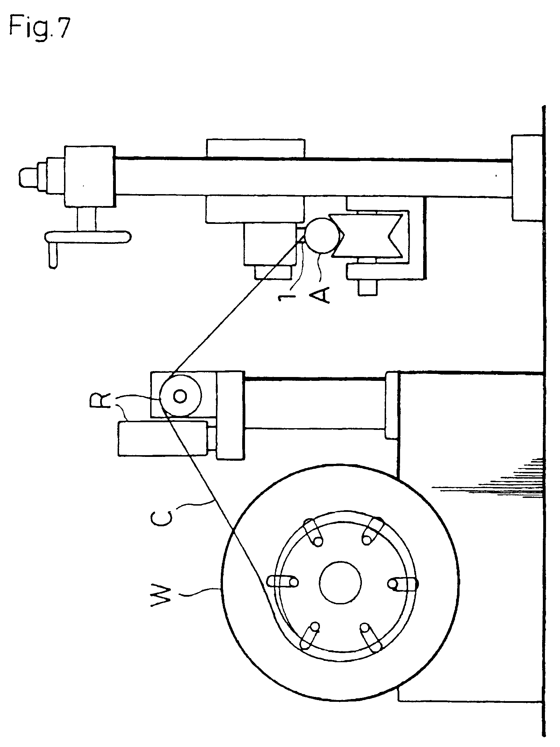

Conventionally, a bead winder as shown in Figs. 6 and 7 has been well known. In detail, the bead winder comprises a guide roller R for upwardly and laterally guiding the weld bead C planed-off by a planing blade 1 and a take-up reel W rotated by a motor M rotatable in a week torque, such as pneumatic drive. The bead winder is so constructed that, when the equipment for manufacturing an electric-seamed steel pipe starts its operation to plane off the weld bead C, at first the planed-off weld bead C is pinched at the utmost end thereof by an operator through a tool, such as pincers, and wound onto the rotating take-up reel W through above the guide roller R, and thereafter weld beads C sequentially planed are wound up to the take-up reel W by means of a winding force thereof. Since a winding amount of the take-up reel W is restricted, each time the electric-seamed steel pipe manufacturing equipment stops, the operator removes the wound-up weld beads C from the take-up reel W to throw away them into a scrap bucket separately disposed.

The above-mentioned prior art of winding-up the weld bead has the following problems:

The operator is required to pinch by handwork by use of the pincers or the like the planed-off weld bead sharp and at a high temperature and wind it onto the take-up reel, which is undesirable because of the danger to cause a labor accident, such as an incised wound or a burn.

Also, the weld bead has the upper limit in windable length, whereby it is required to stop the electric-seamed steel pipe manufacturing equipment at a predetermined interval so as to remove from the take-up reel the weld bead wound-up onto the reel, which is undesirable.

The present invention has been designed in order to eliminate the defect in the prior art.

### SUMMARY OF THE INVENTION

The above-mentioned problems are solved by the present invention with a weld bead cutter mechanism having the features of claim 1. Next, explanation will be given on means for solving the problems. In detail, in an equipment for continuously cylindrically molding metal sheet material and fielding its seam to manufacture an electric-seamed steel pipe A, a weld bead cutter unit for continuously planing off weld bead C projecting from the seam weld zone reduces a distance between a planing blade 1 for planing off the weld bead C and a rotary bend chopper 3 for chopping the bead into small pieces, is fixedly provided at the planing blade 1 with a guide shoe B for upwardly forwardly guiding the pinned weld bead C, and at the outlet side of the guide shoe B with a fixed bead guide 9 for guiding the weld bead C toward the rotary bead chopper 3.

### BRIEF DESCRIPTION OF THE DRAWINGS

Fig. 1 is a side view of a weld bead cutter mechanism of the present invention,
Fig. 2 is a front view of the same,
Fig. 3 is an enlarged front view of a planing blade 1, a guide shoe B, a bead guide 9 and a rotary bead chopper 3 in part,
Fig. 4 is an enlarged front view of the planing blade 1 and guide shoe B in part,
Fig. 5 is an enlarged perspective view only of the bead guide 9 in part,
Fig. 6 is a side view of the conventional bead winder, and
Fig. 7 is a front view of the conventional bead winder.

### DESCRIPTION OF THE PREFERRED EMBODIMENT

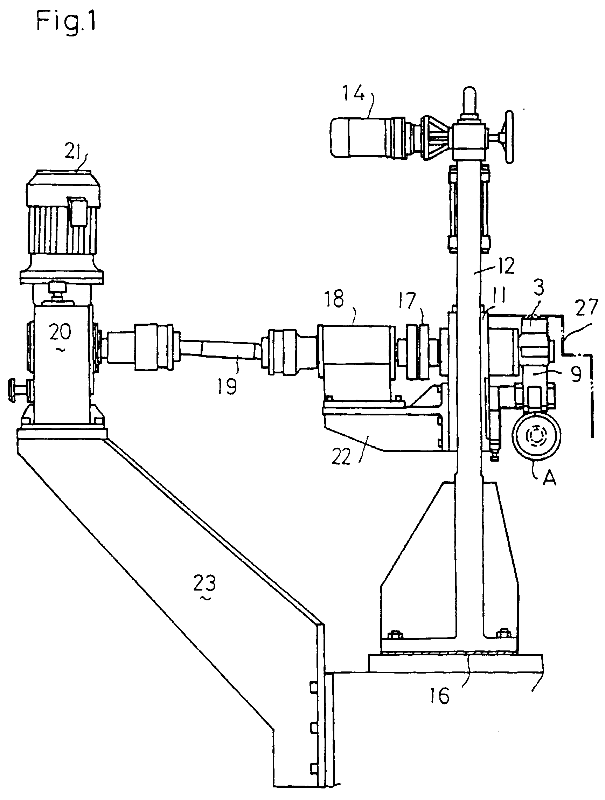

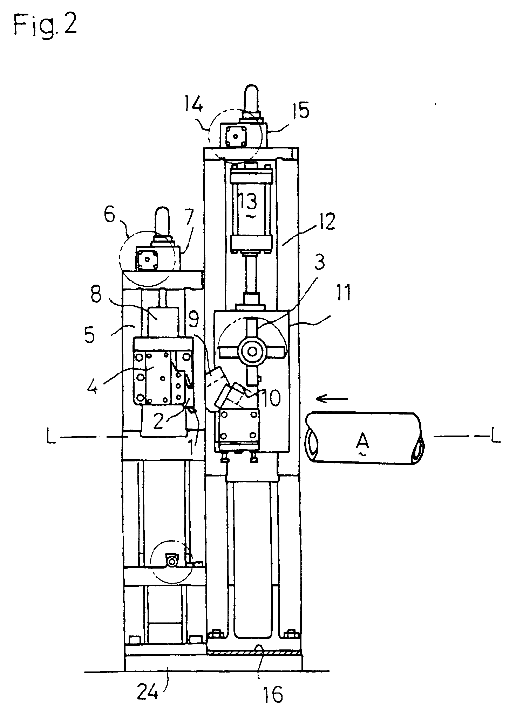

The accompanying Figures 1, 2 and 3 are used to explain the present invention, in which an electric-seamed steel pipe A is forcibly transported leftwardly on the axial line L - L thereof. Reference numeral 1 designates a planing blade for a weld bead, 2 designates a blade holder for holding the blade 1, and 4 designates a block for supporting the blade holder 2, the block 4 being inserted into a stand 5 to be vertically movable for adjustment. Reference numeral 6 designates a drive motor for driving the block 4 up and down so that a gear 7 and a screw mechanism vertically move the block 4 for positional adjustment when the electric-seamed steel pipe A is changed in pipe diameter, and 8 designates a pneumatic cylinder for vertically moving the block 4 when the blade 1 must escape in emergency because the vertically drive motor 6 is not enough to be in time for the emergency.

Reference numeral 9 designates a fixed bead guide for guiding the bead between the planing blade 1 and a rotary bead chopper 3. The principal portion of the present invention relates to combination of the guide shoe B and bead guide 9, in which reference numeral 10 designates a stationary blade so that the weld bead C is chopped into small pieces between the stationary blade 10 and the bead chopper 3. The bead guide 9, stationary blade 10 and rotary bead chopper 3 are supported to a block 11. The block 11 is inserted into a stand 12 and movable up and down for positional adjustment when a pipe diameter is changed.

Reference numeral 14 designates a drive motor for vertically moving the block 11, the block 11 being moved up and down by a gear 15 and a screw mechanism, 13 designates a pneumatic cylinder operated when the planing blade 1 is required to escape in emergency because the vertically movable drive motor 14 is not enough to be in time, and the block 11 being further provided with a guide cover 27 for preventing the dropped weld beads from scattering on all sides, and for collecting them into a waste bucket or a waste discharge conveyor (not shown).

On a support frame 22 are mounted a coupling 17 and a bearing 18, which constitute a rotatable drive mechanism for the bead chopper 3 and are rotatably driven by a drive motor 21, a reduction gear mechanism 20 and a universal drive shaft 19 which are mounted on a separate stand 23. Between the stand 12 and a base plate 24 is inserted a cushion plate 16 for preventing vibrations and impact during the rotation of chopper 3 from being transmitted to other parts.

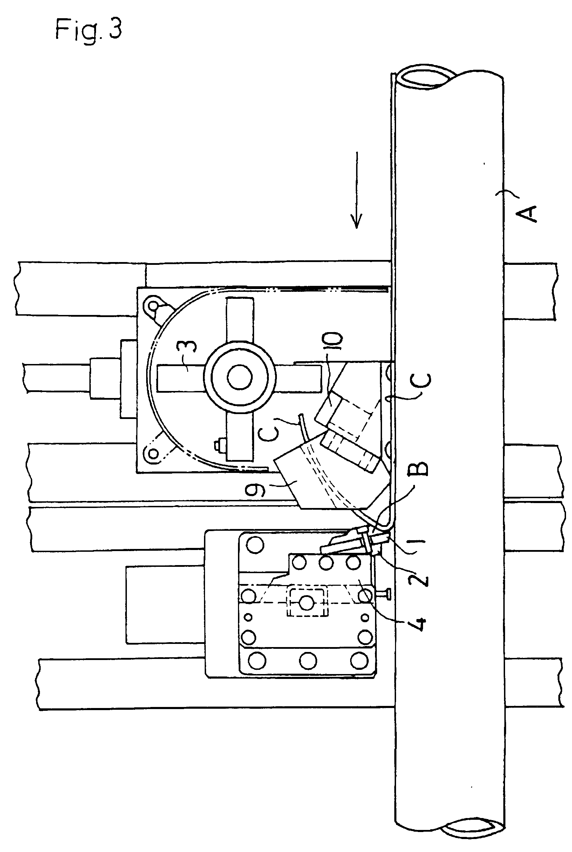

Fig. 3 in a detailed view shows that the weld bead C is planed off from the electric seamed steel pipe A by the planing blade 1, guided upwardly forwardly by the guide shoe B fixed to the planing blade holder 2, and guided between the rotary bead chopper 3 and the stationary blade 10 through the bead guide 9, at which time unless an extending distance from the planing blade 1 to the rotary bead chopper 3 is less than 100 mm, a stable movement path of weld bead cannot be ensured, which is obtained from the experiment. Accordingly, unless the distance between the planing blade 1 and the bead chopper 3 is reduced at the guide shoe B and bead guide 9 are interposed therebetween, the weld bead C cannot be stably supplied between the guide chopper 3 and the stationary blade 10.

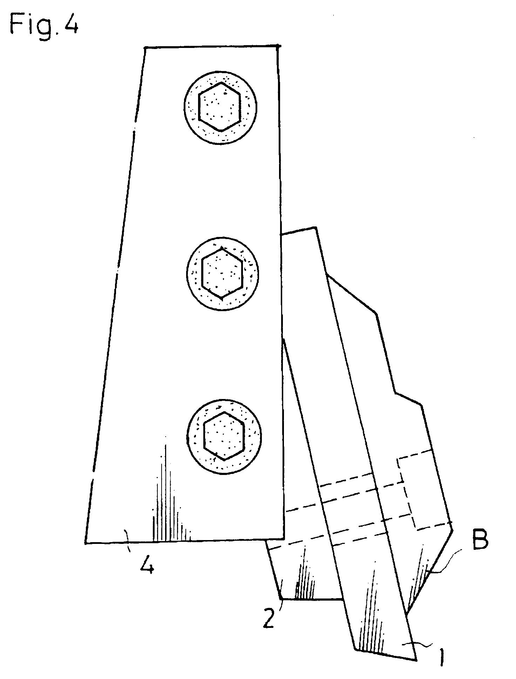

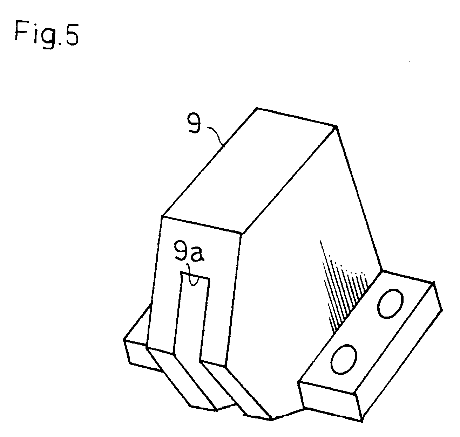

As shown in Fig. 4, the planing blade 1 is fixed to the planing blade holder 2 fixedly slant-wise connected to the block 4 through a connecting bolt, the guide shoe B being fixed by the same bolt to the block 4 together with the planing blade 1 and being provided at the lower end with a guide surface slanted to upwardly bend the weld bead C. In Fig. 5, the bead guide 9 is shown, which guides the weld bead C planed, upwardly bent and turned in the direction is further guided toward the rotary bead chopper 3 and stationary blade 10 along a guide groove 9a disposed just behind the guide shoe B, the rotary bead chopper 3 and stationary blade 10 being disposed outside the outlet of guide groove 9a.

The present invention constructed as the above-mentioned has the following effect. In detail, in the present invention, the weld bead C is planed from the steel pipe A by the planing blade 1, upwardly forwardly guided by the guide shoe B fixedly provided at the planing blade holder 2, and automatically guided between the stationary blade 10 and the bead chopper 3 rotatable through the short guide 9, so that there is no need for the operator to manually guide the weld bead, thereby not causing the danger to occur labor accident. Furthermore, the weld bead guided between each rotary bead chopper 3 is chopped into small pieces and continuously discharged through the guide cover 27 into the waste bucket or the waste discharge conveyor disposed below, whereby it is never hindered that the electric-seamed steel pipe manufacturing equipment is operated continuously for a long time. Hence, the present invention is recognized to be technique of demonstrating an extremely useful effect.

## Claims

1. A weld bead cutter mechanism for an equipment for manufacturing an electric-seamed steel pipe (A) by continuously cylindrically molding metal sheet material and welding a seam, comprising:
a weld bead cutter unit comprising a planing blade (1) for continuously planing a weld bead (C) projecting from a seam weld zone,
a rotary bead chopper (3) for continuously chopping said weld bead (C) planed by said planing blade (1) into small pieces, and
a bead guide (9) provided between said planing blade (1) and said rotary bead chopper (3),
characterized in that said bead guide (9) is provided with a guide groove (9a) along which said planed weld bead (C) is guided.

2. The weld bead cutter mechanism according to claim 1, characterized in that a guide shoe (B) is fixedly provided between said planing blade (1) and said bead guide (9) for upwardly forwardly guiding said planed weld bead (C).

3. The weld bead cutter mechanism according to claim 1 or 2, characterized in that a length of said weld bead (C) between said planing blade (1) and said bead chopper (3) is less than 100 mm.

## Patentansprüche

1. Schweißwulst-Schneidvorrichtung für eine Anlage zum Herstellen eines elektronahtgeschweißten Stahlrohrs (A) durch kontinuierliches Rundformen von Metallblechmaterial und Schweißen einer Naht, umfassend:
eine Schweißwulst-Schneideinheit mit einem Hobelmesser (1) zum kontinuierlichen Abhobeln eines von einer Nahtschweißzone vorstehenden Schweißwulsts (C),
einen Dreh-Wulstzerhacker (3) zum kontinuierlichen Zerhacken des vom Hobelmesser (1) abgehobelten Schweißwulstes (C) in kleine Stücke, und
eine zwischen dem Hobelmesser (1) und dem Dreh-Wulstzerhacker (3) vorgesehene Wulstführung (9),
dadurch gekennzeichnet, daß die Wulstführung (9) mit einer Führungsnut bzw. -rille (9a) versehen ist, entlang der der abgehobelte Schweißwulst (C) geführt wird.

2. Schweißwulst-Schneidvorrichtung nach Anspruch 1, dadurch gekennzeichnet, daß ein Führungsschuh (B) feststehend zwischen dem Hobelmesser (1) und der Wulstführung (9) zum Führen des abgehobelten Schweißwulstes (C) nach oben und nach vorne vorgesehen ist.

3. Schweißwulst-Schneidvorrichtung nach Anspruch 1, dadurch gekennzeichnet, daß eine Länge des Schweißwulstes (C) zwischen dem Hobelmesser (1) und dem Wulstzerhacker (3) weniger als 100 mm beträgt.

## Revendications

1. Dispositif de coupage d'un cordon de soudure pour un équipment de production d'un tube d'acier (A) à joint de soudure électrique, par moulage cylindrique d'une feuille continue de matériau métallique et par soudure dudit joint, comprénant:
une unité de coupage dudit cordon de soudure comprénant un couteau d'enlèvement (1) pour enlever de façon continue un cordon de soudure (C) faisant saillie d'une zone de joint soudé,
une trancheuse rotative de cordon (3) pour trancher ledit cordon de soudure (C), enlevé par ledit couteau d'enlèvement (1), d'une manière continue en petits morceaux,
un élément de guidage (9) dudit cordon, prévu entre ledit couteau d'enlèvement (1) et ladite trancheuse de cordon (3),
caractérisé en ce que ledit élément de guidage (9) du cordon est pourvue d'une rainure de guidage (9a) le long de laquelle ledit cordon de soudure (C) enlevé est guidé.

2. Dispositif de coupage d'un cordon de soudure selon la revendication 1, caractérisé en ce qu'un sabot de guidage (B) est prévu d'une manière fixe entre ledit couteau d'enlèvement (1) et ledit élément de guidage (9) pour diriger ledit cordon de soudure (C) enlevé vers le haut et en avant.

3. Dispositif de coupage d'un cordon de soudure selon la revendication 1, caractérisé en ce qu'une longueur dudit cordon de soudure (C) entre ledit couteau d'enlèvement (1) et ladite trancheuse de cordon (3) est de moins de 100 mm.
